# EUROPEAN PATENT APPLICATION

(11) **EP 4 615 128 A1**
(43) Date of publication of application: **10.09.2025**
(21) Application number: 25162289.0
(22) Date of filing: 07.03.2025
(51) Int. Cl.: H04W 72/27, H04W 74/0816, H04W 84/12, H04W 92/20

(54) **MULTI-ACCESS POINT COORDINATION METHOD, WIRELESS COMMUNICATION DEVICE, AND MULTI-ACCESS POINT COORDINATION SYSTEM CAPABLE OF TRIGGERING COORDINATED TRANSMISSION**

(30) Priority: 07.03.2024 US 202463562323 P
(71) Applicant: MediaTek Inc., Hsinchu City, 30078 (TW)
(72) Inventor: FANG, Pochun, 30078 Hsinchu City (TW); LU, Kai Ying, San Jose, 95134 (US)
(74) Representative: Haseltine Lake Kempner LLP

(57) **Abstract**

A multi-access point (M-AP) coordination method comprises receiving a coordination control frame, by a processor of a second access point (AP), wherein the coordination control frame is transmitted from a first AP, wherein the coordination control frame comprises at least one user information field for at least one shared AP, and each of the at least one user information field comprises an AP ID of a shared AP and coordination transmission parameters information of the shared AP; identifying, by the processor, the second AP as the shared AP if the AP ID of the second AP is in one user information field; and transmitting, by the processor, a packet during a transmission opportunity (TX OP) shared by the first AP based on the coordination transmission parameters information in the user information field containing the AP ID of the second AP.

## Description

### CROSS REFERENCE TO RELATED APPLICATIONS

This application claims the benefit of U.S. Provisional Application No. 63/562,323, filed on March 7th, 2024.

### BACKGROUND

Wireless Local Area Networks (WLANs) have become essential for high-speed wireless internet access. The IEEE 802.11 standard, specifically the 802.11be (Wi-Fi 7) to 802.11bn (Wi-Fi 8) amendments, leverage multi-access point (M-AP) coordination schemes to enhance performance and reliability. These M-AP coordination schemes, including coordinated spatial reuse (CSR), coordinated beam-forming (CBF), and coordinated time division multiple access (TDMA), allow access points (APs) to cooperate and share resources, such as transmission opportunity (TxOP), thereby optimizing network efficiency and user experience.

However, there is currently no solution for exchanging transmission parameters to coordinate transmission.

### SUMMARY

In an embodiment, a multi-access point (M-AP) coordination method is disclosed. The M-AP coordination method comprises receiving a coordination control frame, by a processor of a second access point (AP), wherein the coordination control frame is transmitted from a first AP, wherein the coordination control frame comprises at least one user information field corresponding to a second AP, and each of the at least one user information field comprise coordination transmission parameters information corresponding to the second AP; and transmitting, by the processor, a packet during a transmission opportunity (TX OP) shared by the first AP based on the coordination transmission parameters information in the user information field corresponding to the second AP.

In an embodiment, a multi-access point (M-AP) coordination method is disclosed. The M-AP coordination method comprises: generating a coordination control frame, by a processor of a first access point (AP), wherein the coordination control frame comprises at least one user information field corresponding to a second AP, and each of the at least one user information field comprise coordination transmission parameters information corresponding to the second AP; and transmitting, by the processor, the coordination control frame to the shared AP.

In another embodiment, a wireless communication device is disclosed. The wireless communication device comprises a transceiver, configured for performing a transmission operation or a reception operation, and a processor. The processor is configured to perform the following operations: receiving a coordination control frame, by a processor of a second access point (AP), wherein the coordination control frame is transmitted from a first AP, wherein the coordination control frame comprises at least one user information field corresponding to a second AP, and each of the at least one user information field comprise coordination transmission parameters information corresponding to the second AP; and
transmitting, by the processor, a packet during a transmission opportunity (TX OP) shared by the first AP based on the coordination transmission parameters information in the user information field corresponding to the second AP.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG.1 is a block diagram of a multi-access point (M-AP) coordination system according to an embodiment of the present invention.
FIG.2 is an architecture diagram of a first access point and a second access point of the M-AP coordination system in FIG. 1.
FIG.3A is a schematic diagram of the coordination control frame.
FIG.3B is a schematic diagram of user information field in a coordination control frame of the M-AP coordination system in FIG. 1.
FIG.4 is a schematic diagram of signal sequences under a first mode of the M-AP coordination system in FIG. 1.
FIG.5 is a schematic diagram of signal sequences under a second mode of the M-AP coordination system in FIG. 1.
FIG.6 is a schematic diagram of signal sequences under a third mode of the M-AP coordination system in FIG. 1.
FIG.7 is a flow chart of performing an M-AP coordination method by a shared AP of the MAP coordination system in FIG. 1.
FIG.8 is a flow chart of performing an M-AP coordination method by a sharing AP of the MAP coordination system in FIG.1.

### DETAILED DESCRIPTION

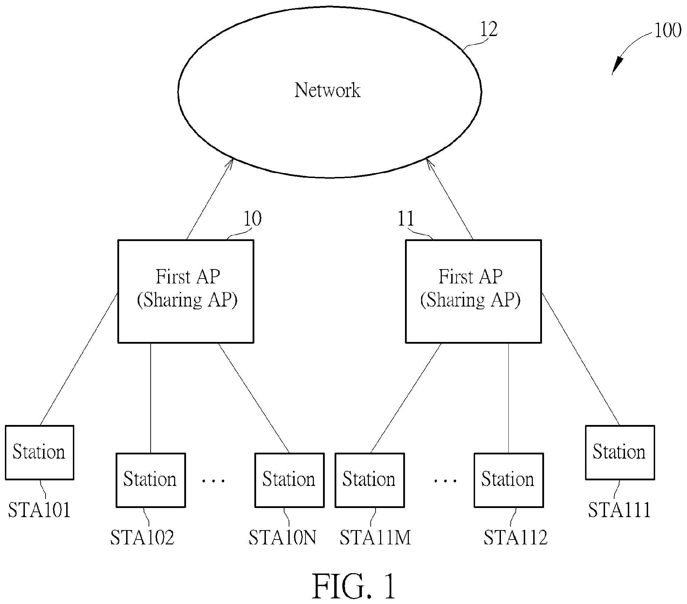

FIG.1 is a block diagram of a multi-access point (M-AP) coordination system 100 according to an embodiment of the present invention. The M-AP coordination system 100 is a groundbreaking innovation designed to optimize the performance and reliability of M-AP networks within the IEEE 802.11 framework, particularly relevant for the advancements brought by Wi-Fi 7 and the forthcoming Wi-Fi 8 standards. This system directly addresses the challenges of coordinating multiple access points by introducing a novel approach to the trigger frame mechanism. By enhancing the conventional trigger frame with enriched information fields, it enables seamless communication and cooperation between access points, facilitating techniques such as coordinated spatial reuse (CSR), coordinated beam-forming (CBF), and coordinated time division multiple access (TDMA).

In FIG.1, the M-AP coordination system 100 includes a first access point (AP) 10 and a second AP 11. The first AP 10, also referred to as the sharing AP, is a key component of the M-AP coordination system. It is designed to share its transmission opportunity (TX OP) with other APs, enabling coordinated transmission and improved network efficiency. The first AP 10 and the second AP 11 can communicate with a network 12. Further, the first AP 10 can also communicate with N stations, such as stations STA101 to STA10N. N is a positive integer. It should be understood that in the embodiment, the TX OP is a time interval during which the first AP 10 is allowed to transmit data frames. The duration of the TX OP can vary depending on factors such as a data rate at which the AP sends packets of the STA to the STA, a queue size used by the AP to store the STA's data, and the network conditions. The second AP 11 is a shared AP used for transmitting a frame (e.g. PPDU) during the shared TX OP provided by the first AP 10 based on its transmission parameters information. The transmission parameters information of the second AP 11 is achieved through a coordination control frame (for example, MU-RTS+). Similarly, the second AP 11 can communicate with the network 12. The second AP 11 can communicate with M stations, such as stations STA111 to STA11M. M is a positive integer. In the embodiment, an M-AP coordination system 100 comprises the first AP 10 and the second AP 11. However, it is to be understood that, in a more general sense, the M-AP coordination system 100 may comprise at least one wireless communication device. Herein, the term "wireless communication device" serves as a generic term encompassing any type of AP, thereby indicating that the system is not limited to the specific configuration of two APs.

In the M-AP coordination system 100, the second AP 11 receives the coordination control frame (e.g., MU-RTS+) from the first AP 10. The second AP 11 is identified as the shared AP based on an AP ID in a user information field in the coordination control frame (e.g., MU-RTS+). The second AP 11 may identify the first AP 10 as a sharing AP based on a coordinated AP list and an AP ID of the first AP 10 in the coordination control frame. At least one coordination configuration of the first AP 10 and the second AP 11 is acquired by the second AP 11 based on at least one user information field in the coordination control frame (e.g., MU-RTS+). Details of the M-AP coordination system 100 are illustrated below.

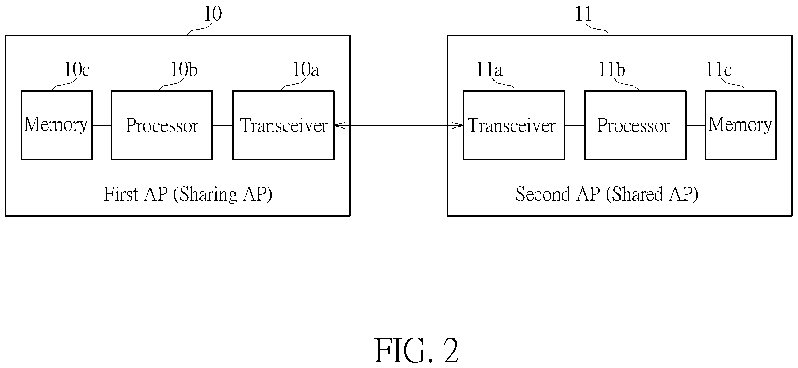

FIG.2 is an architecture diagram of the first AP 10 and the second AP 11 of the M-AP coordination system 100. The first AP 10 includes a transceiver 10a, a processor 10b, and a memory 10c. The transceiver 10a transmits the coordination control frame (E.G., MU-RTS+) to the second AP 11. The memory 10c stores data and instructions necessary for the AP's operation, including the software programs that enable the transmission of the coordination control frame (E.G., MU-RTS+), facilitating communication with the second AP 11. The processor 10b can control the transceiver 10a and the memory 10c. The processor 10b can generate the coordination control frame (e.g., MUR-TS+), which includes information about the coordinated transmission parameters, such as maximum transmission power allowable, RU allocation allocated for the second AP11 to transmit PPDU, and interference level.

The second AP 11 includes a transceiver 11a, a processor 11b, and a memory 11c. The transceiver 11a enables the transmission and reception of packets, allowing the second AP 11 to coordinate with the first AP 10 and communicate with its stations. This coordination process involves receiving the coordination control frame (e.g., MU-RTS+) from the first AP 10 and transmitting response signals or synchronously transmitting physical layer protocol data unit (PPDU) packets based on the received coordination control frame (e.g., MU-RTS+). The memory 11c stores data and instructions necessary for the AP's operation, including the software programs used for processing the coordination control frame (e.g., MU-RTS+) received from the first AP 10. This program allows the second AP 11 to identify the shared AP, identify the sharing AP, and acquire the coordination transmission parameters. Additionally, the memory 11c stores the coordinated AP list used for identifying purposes and any pre-negotiated values required for communication and coordination with the first AP 10. The processor 11b can control the transceiver 11a and the memory 11c. The processor 11b can execute processes associated with M-AP coordination, as illustrated below.

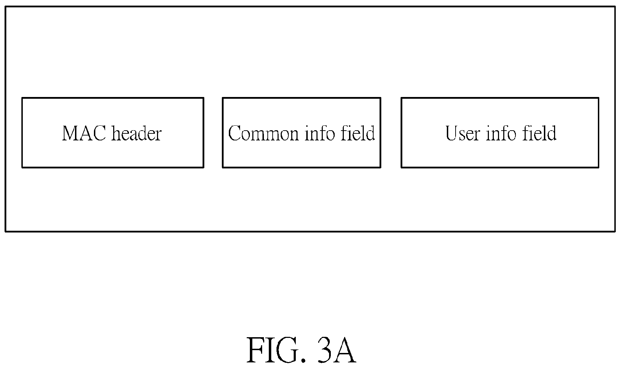

In the M-AP coordination system 100, the second AP 11 receives the coordination control frame (e.g., MU-RTS), wherein the coordination control frame comprises a Media Access Control (MAC) header, a common information field, and one or more user information fields, as shown in FIG.3A. In some embodiments, one or more user information fields in the coordination control frame comprises at least one user information field for APs. In some embodiments, one or more user information fields also comprise user information fields for STAs.

The coordination control frame may comprise at least one special user information field. The special user information field comprises an AID field and some global announce fields to shared AP(s). The coordination control frame (e.g., MU-RTS+) uses reserved or non-reserved AID as a special AID in the AID field in the special user information field for signaling the presence of globally announced information to shared APs, wherein the globally announced information is common information to shared AP(s). The special AID may occupy 12 bits. The remaining 28 bits within the special user information fields may carry common information to shared AP(s). The common information to shared AP(s) may comprise one or more of the sharing AP's AP ID (e.g., an AP AID in Sharing AP's AID field, or a pre-negotiated unique ID of the sharing AP in non-AID field), a coordination mode information, transmission power information for the sharing AP, a beamforming target, PHY (Physical Layer) mode, sharing TX OP's timing information (e.g., start time of sharing TX OP and end time of sharing TX OP), PPDU duration information and the tolerable interference signal level. The tolerable interference signal level may indicate the strength of the interference signal that the sharing AP can tolerate from other APs or devices. The PHY mode information may indicate a protocol version followed by the sharing AP. The coordination mode information may indicate a coordination transmission mode implemented during the TX OP, for example, the CSR, the CBF, the TDMA, or the NPCA. The beamforming target may represent the object that the sharing AP performs beamforming on.

The second AP 11 can identify the first AP 10 as a sharing AP based on the coordinated AP list and the AP ID of the first AP 10. The AP ID of the first AP 10 may be the transmitter address (TA) in the MAC header, an AP AID in Sharing AP's AID field in the coordination control frame, or a pre-negotiated unique ID of the first AP in non-AID field in the coordination control frame. For example, the second AP 11 can acquire the AP ID of the first AP 10 based on a transmitter address (TA) in the MAC header, a sharing AP AID field in the special user field, or an ALMAC field in the special user field for indicating the pre-negotiated unique ID of the sharing AP. If the sharing AP ID of the first AP is in the coordinated AP list, the first AP identifies the first AP 10 as a sharing AP.

For the coordination control frame (e.g., MU-RTS+), the coordination control frame (e.g., MU-RTS+) is used for coordinating the transmission of two or more APs. The coordination control frame comprises at least one user information field for at least one shared AP. Each of the at least one user information field for at least one shared AP in the coordination control frame (e.g., MU-RTS+) comprises AP ID of a target AP (a shared AP) and corresponding coordination transmission parameters information. The at least one user information field in this frame can be used for notifying target AP(s) (shared AP(s)) of their respective coordination transmission parameters information. Each target AP (shared AP, such as the second AP 11) is assigned a unique AP ID, which is used for identifying the target AP (shared AP). The second AP 11 can check if its unique AP ID is included in one of the user information fields. In the embodiment, the unique AP ID of the second AP 11 can be a MAC address of the second AP, a basic service set (BSS) ID of a BSS of the second AP, an AP AID of the second AP, or a pre-negotiated value for the second AP. The unique AP ID can be per-BSS assigned, per-Radio assigned, or per-AP assigned. For example, for per-BSS assigned, the same AP has different BSS IDs in different BSSs. For per-radio assigned, different AP IDs can be assigned to the same AP for different frequency bands used by the AP. For per-AP assigned, different APs have different AP IDs. The AP ID may be pre-negotiated to avoid duplication with the IDs of other APs or associated stations.

The user information fields can also carry coordination transmission parameters information for coordination transmission of the shared AP. This coordination transmission parameters information can include at least one of Tx (Transmission) Power for the shared AP, a beamforming target, Target STAs (Stations) ID of the target AP, interference signal level, target AP's STA response block acknowledgment information, and RU (Resource Unit) allocation for the target AP. The interference signal level may indicate the strength of the interference signal induced by the sharing AP. The beamforming target in the user information field may represent the object that the shared AP performs beamforming on. The target AP's STA response block acknowledgment information may indicate parameters used by the STA to reply to the block acknowledgment. The coordination transmission parameters information may also carry packet-related parameters information, wherein the packet-related parameters information may comprise at least one of PHY (Physical Layer) mode, GI (Guard Interval) in a PPDU to be transmitted by the shared AP and/or the sharing AP, LTF (Long Training Field) symbol numbers in the PPDU to be transmitted by the shared AP and/or the sharing AP, LTF Type in the PPDU to be transmitted by the shared AP and/or the sharing AP. In some embodiments, the coordination transmission parameters information does not carry packet-related parameters information, and the packet-related parameters information is carried in at least one special user information field. By including the coordination transmission parameters information in the user information field in the coordination control frame (e.g., MU-RTS+), the first AP 10 (sharing AP) can ensure that the second AP 11 can be aware of the transmission parameters and can properly coordinate their transmissions.

In some embodiments, there is no special user information field in the coordination control frame. The transmission parameters information in the user information field may carry information of the sharing AP. The information of the sharing AP may comprise one or more of the sharing AP's AP ID (e.g., the AP AID in Sharing AP's AID field, or the pre-negotiated unique ID of the sharing AP in non-AID field), a coordination mode information, transmission power information for the sharing AP, a beamforming target of sharing AP, PHY mode and sharing TX OP's timing information (e.g., start time of sharing TX OP and end time of sharing TX OP).

In some embodiments, for user information fields in the coordination control frame (e.g., MU-RTS+), it allows the same AID to be used across different user information fields. The AID may occupy 12 bits. The remaining 28 bits within the user information field may carry coordination transmission parameters information. If the remaining 28 bits are not enough to carry coordination transmission parameters information for the second AP, multiple concatenated user information fields can be used for carrying coordination transmission parameters information, wherein the multiple concatenated user information fields have the same AID.

Additionally, the coordination control frame (e.g., MU-RTS+) can be directed to different recipients. It can be sent to one or more APs, or it can be sent to both APs and one or more stations (STAs). So, the coordination control frame may comprise at least one user information field for STA(s) of the sharing AP. For the sharing AP's own associated STA, its AID can be included in user information field corresponding to the STA in the same coordination control frame (e.g., MU-RTS+), wherein a format of user information field corresponding to the STA may follow the usage defined in the 802.11 specification.

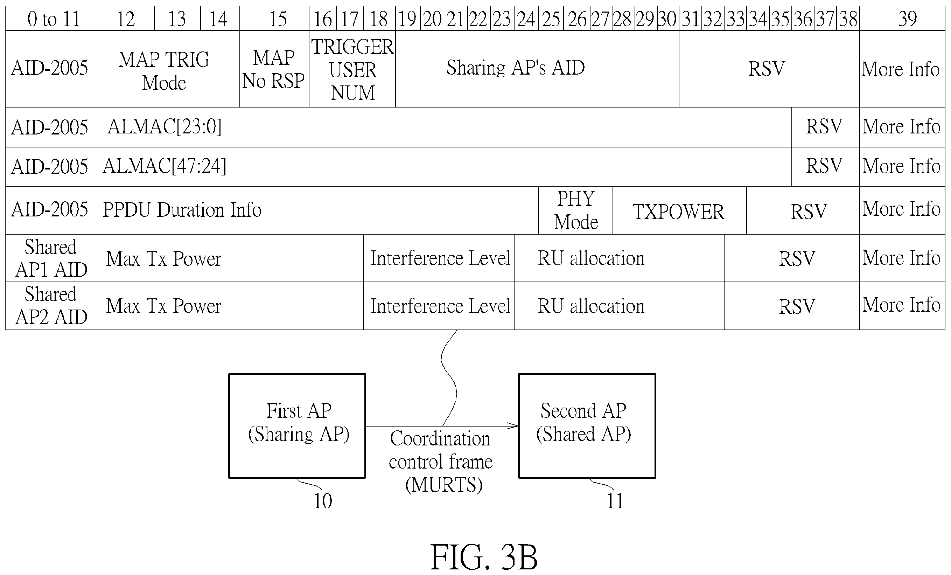

FIG.3A is a schematic diagram of the coordination control frame (e.g., MU-RTS+) of the M-AP coordination system 100. The coordination control frame (e.g., MU-RTS+) comprises a MAC header, a common information field, a special user information field, and a user information field. The common information field may comprise information for identifying the presence of the special user information field. For example, Common information Bit 55 may be set to 0 to notify the special user information field exists. FIG.3B shows a schematic diagram of the special user information field and the user information field.

The special user information field comprises an AID field and common fields to shared AP(s). In this embodiment, the AID field in the special user information field has a special AID for identifying the special user information field. The special AID may be AID-2005. In the negotiation stage, each AP that joins a coordinated pair or group is assigned a unique AP AID. For example, the AP AID of the first AP 10 (sharing AP) could be set to 4000, while the AP AID (i.e., shared AP1 AID, shared AP2 AID) for the shared APs (the second AP 11) is allocated as 4001, 4002, and so on. One AP may be assigned with different AP IDs in different coordinated pairs or groups. The AID-2005 can be regarded as a special AID for identifying the special user information field. The AID-2005 is used in the special user information field in the coordination control frame (e.g., MU-RTS+) to indicate that the information following it is common and may be processed by all shared APs.

The special user information field may have a format as shown in Fig. 3B. It includes 12 bits for the special AID (e.g., AID-2005) and 28 bits for carrying the common information to shared AP(s). The 28 bits can be divided into smaller fields to carry specific information like the number of shared APs, a Sharing AP's ID, or other related parameters. For example, in FIG.3B, a TRIG Mode filed, which has three bits (bit 12 to bit 14), may be used for indicating a coordination transmission mode triggered by the coordination control frame, which is implemented during the TX OP, for example, the CSR, the CBF, the TDMA transmission or the NPCA. A MAP No RSP field, which has one bit (bit 15), may be used for indicating whether there is a response for the coordination control frame (e.g., MU-RTS+). A TRIGGER USER NUM field, which has three bits (bit 16 to bit 18) or two bits (bit 16 to bit 17), may be used for indicating the number of shared APs to be triggered. Further, a Sharing AP's AID field, which has 12 bits (bit 19 to bit 30 or bit 18 to bit 29), may be used for indicating the AP AID of a sharing AP (e.g., the first AP 10). Eight bits (bit 31 to bit 38) or nine bits (bit 30 to bit 38) can be used for representing a reserved field (RSV). A More Info field, which has one bit (bit 39), may be used for indicating extra information. An "ALMAC" field can be used for indicating a pre-negotiated AP unique ID used for notifying other APs about the source AP (sharing AP, as the first AP 10). If the coordination control frame carries Sharing AP's AID field, the coordination control frame may not carry the "ALMAC" field. If the coordination control frame carries the "ALMAC" field, the coordination control frame may not carry Sharing AP's AID field.

In some embodiments, when the second AP 11 identifies the special AID (e.g., AID-2005), the second AP 11 identifies the special user information field. Then, the second AP 11 can validate the AP AID of the first AP 10 based on the coordinated AP list. If the AP AID of the first AP is in the coordinated AP list, it may mean the first AP is from an established coordinated pair or group of the second AP and the first AP passes the validation.

The user information field comprises a Shared AP field and some coordination transmission fields. The Shared AP field indicates AP AID of the shared AP. Some coordination transmission fields may comprise a Max Tx Power field, an Interference Level field, a RU allocation field, a reserved field, and a More info field. The Max Tx Power field indicates maximum transmission power of the shared AP. The RU allocation field indicates a RU (Resource Unit) allocation for the shared AP. The More info field indicates whether the user information field and the following user information field have the same AP AID. For example, if the More info field is set to 1, it means that the user information field and the following user information field have the same AP AID.

In an alternative embodiment, the AP ID of the shared AP is a BSS ID of a BSS of the shared AP, and the user information field comprises an AID field indicating a special AID and a BSS ID field is after the AID field and indicates the BSS ID of the BSS of the shared AP. In an alternative embodiment, the AP ID of the shared AP is MAC address of the second AP, and the user information field comprises an AID field indicating a special AID and a MAC field is after the AID field and indicates the MAC address of the shared AP.

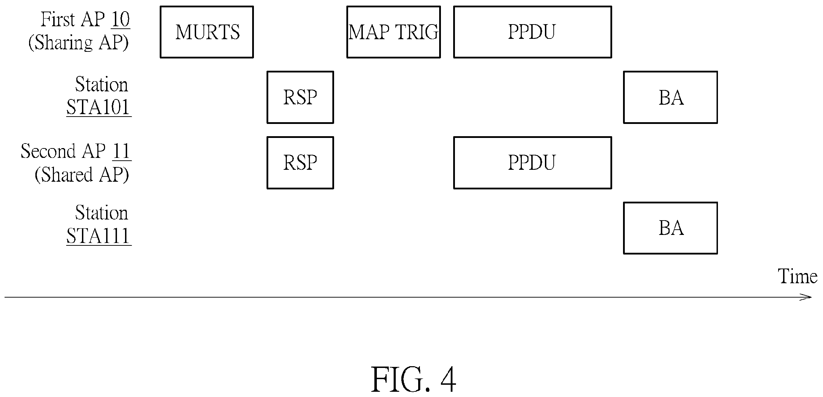

FIG.4 is a schematic diagram of signal sequences under a first mode of the M-AP coordination system 100. The X-axis is a timeline. First, the first AP 10 transmits the coordination control frame (e.g., MU-RTS+) to the second AP 11 and the station STA101. Then, the second AP 11 and the station STA101 transmit response signals RSP to the first AP 10 in response to the coordination control frame (e.g., MU-RTS+), wherein the RSP may be a CTS (Clear To Send). After the response signals RSP are received by the first AP 10, the first AP 10 transmits the M-AP trigger frame MAP TRIG for timing synchronization to the second AP 11. Specifically, the trigger frame is used for triggering the second AP 11 to perform a synchronized transmission so that the starting time and ending time of a PPDU transmitted by the second AP 11 is synchronized with the starting time and ending time of a PPDU transmitted by the first AP 10. Then, the first AP 10 and the second AP 11 synchronously transmit PPDUs to their stations (STA101 and STA111) during the TX OP. Finally, the stations STA101 and STA111 can generate block acknowledgment signals BA in response to the PPDUs.

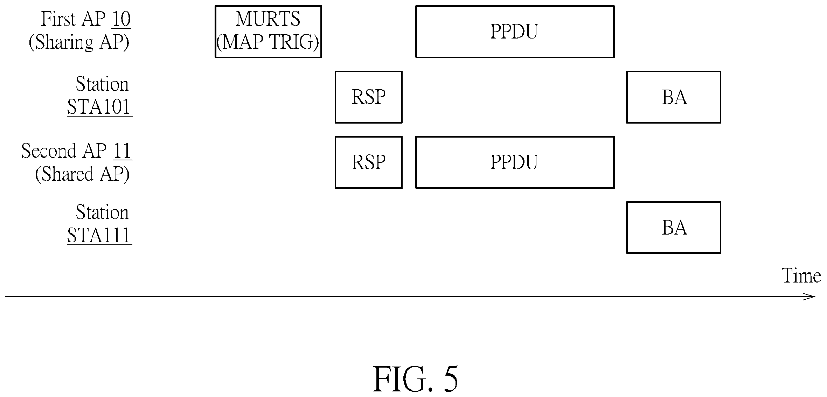

FIG.5 is a schematic diagram of signal sequences under a second mode of the M-AP coordination system 100. The X-axis is a timeline. In this embodiment, the coordination control frame (e.g., MU-RTS+) serves as a type of the M-AP trigger frame MAP TRIG for timing synchronization and controlling at least one shared AP. First, the first AP 10 transmits the coordination control frame (e.g., MU-RTS+) as the type of the M-AP trigger frame MAP TRIG to the second AP 11 and the station STA101. Then, the second AP 11 and the station STA101 transmit response signals RSP to the first AP 10 in response to the coordination control frame (e.g., MU-RTS+). After the response signals RSP are received by the first AP 10, the first AP 10 and the second AP 11 synchronously transmit PPDU to their stations (STA101 and STA111) based on the M-AP trigger frame during the TX OP. Then, the stations STA101 and STA111 can generate block acknowledgment signals BA in response to the PPDUs.

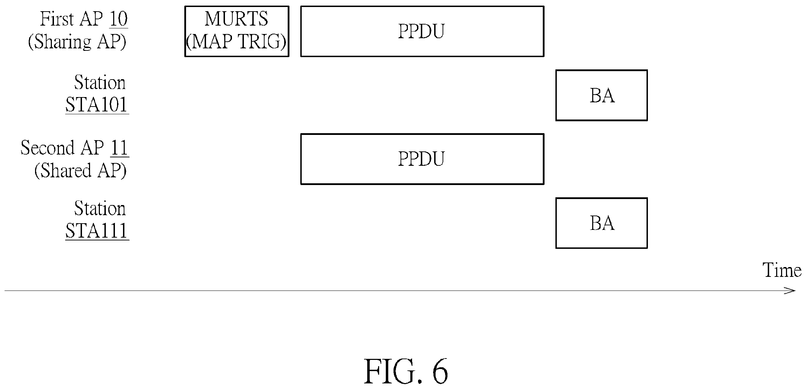

FIG.6 is a schematic diagram of signal sequences under a third mode of the M-AP coordination system 100. The X-axis is a timeline. In this embodiment, the coordination control frame (e.g., MU-RTS+) serves as the type of the M-AP trigger frame MAP TRIG for timing synchronization and controlling at least one shared AP. First, the first AP 10 transmits the coordination control frame (e.g., MU-RTS+) as the type of the M-AP trigger frame MAP TRIG to the second AP 11. The coordination control frame is used for triggering the starting time and the ending time of the packet transmitted by the second AP to be synchronized with the starting time and the ending time of a first packet transmitted by the first AP. In this embodiment, the second AP 11 does not transmit a response signal RSP based on the MAP No RSP field. Then, the first AP 10 and the second AP 11 synchronously transmit PPDUs to their stations (STA101 and STA111) based on the M-AP trigger frame during the TX OP. In this embodiment, the second AP 11 may transmit the PPDU immediately after a Short Interframe Space (SIFS) time after the coordination control frame ends. The stations STA101 and STA111 can generate block acknowledgment signals BA in response to the PPDU packets.

In the aforementioned embodiments, the coordination control frame (e.g., MU-RTS+) is used to bring the content of the coordination control frame (e.g., MU-RTS+) into MU-RTS+ for coordinated spatial reuse (CSR) or coordinated beam-forming (CBF). In this case, the coordination control frame (e.g., MU-RTS+) may be the MU-RTS.

Upon receiving the coordination control frame (e.g., MU-RTS+), the second AP 11 may parse the common information field to identify the presence of special user information field. It then checks the user information's AID field to determine if the special AID (e.g., AID 2005 designated for M-AP usage) exists. If the special AID exists, the second AP 11 parses the special user information fields associated with the special AID (e.g., AID 2005) to obtain the AP ID (e.g., ALMAC, or AP AID) of the first AP 10 and determines the AP ID of the first AP 10 is in the coordinated AP list. After the frame is confirmed to be for CoSR and the second AP 11 finds its own AP ID in the user information field, the second AP 11 can use the common information and coordination transmission parameters provided by the first AP 10 to regulate its transmission power and PPDU duration during concurrent transmission.

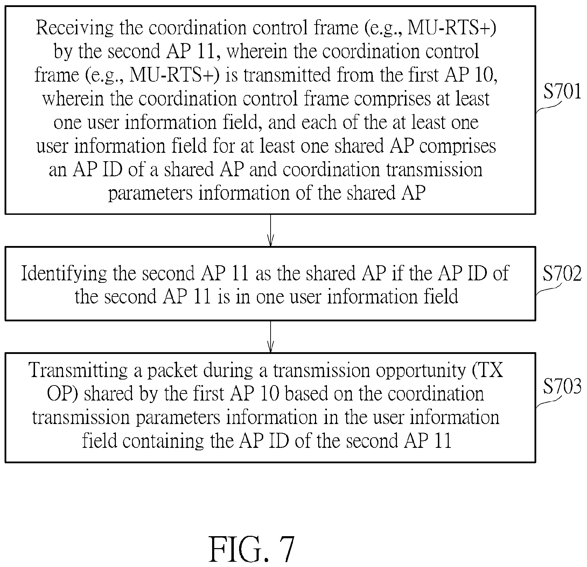

FIG.7 is a flow chart of performing an M-AP coordination method by a shared AP. The M-AP coordination method includes step S701 to step S704. Any hardware or technology modification falls into the scope of the embodiments. Step S701 to step S704 are illustrated below.

| | |
|---|---|
| Step S701: | receiving the coordination control frame (e.g., MU-RTS+) by the second AP 11, wherein the coordination control frame (e.g., MU-RTS+) is transmitted from the first AP 10, wherein the coordination control frame comprises at least one user information field for at least one shared AP, and each of the at least one user information field comprises an AP ID of a shared AP and coordination transmission parameters information of the shared AP. The at least one shared AP may be one shared AP, or the at least one shared AP may be multiple shared APs. |
| Step S702: | identifying the second AP 11 as the shared AP if the AP ID of the second AP 11 is in one user information field; |
| Step S703: | transmitting a packet during a transmission opportunity (TX OP) shared by the first AP 10 based on the coordination transmission parameters information in the user information field containing the AP ID of the second AP 11. |

The user information fields can carry information regarding to parameters for both sharing and shared APs for transmitting the following PPDU, such as PHY Mode, GI, LTF Symbol Numbers, LTF Type, sharing TX OP timing information (start time and end time), transmission Power, Beamforming target, Target STA ID of Target AP, interference signal level, tolerable interference signal level, Target AP's STA response Block ack information, Target AP's Identification, and RU allocation.

In some embodiments, the coordination transmission parameters information may comprise at least one of transmission Power information for the shared AP, beamforming target information for the shared AP, Target STA ID of shared AP, an interference signal level induced by sharing AP, target AP's STA response block acknowledgment information, a resource unit allocation for the shared AP, an AP ID of the sharing AP, the tolerable interference signal level of sharing AP, coordination mode information for indicating a coordination transmission mode during the TX OP, information for indicating whether there is a response for the coordination control frame, information for indicating the number of shared AP, a Beamforming target information for the sharing AP, PPDU duration information, PHY mode, and transmission Power information for the sharing AP.

In some embodiments, the coordination control frame further comprises at least one special user information field, and each of at least one special user information field comprises a special AID and common information for all shared AP, and the packet is transmitted based on the coordination transmission parameters information and the common information.

In some embodiments, the common information comprises at least one of coordination mode information for indicating a coordination transmission mode during the TX OP, information for indicating whether there is a response for the coordination control frame, information for indicating the number of shared APs, AP ID of the first AP, the tolerable interference signal level of sharing AP, PPDU duration information, PHY mode, and transmission Power information for the sharing AP.

In some embodiments, the coordination transmission parameters information or the common information comprises packet-related parameter information of the shared AP, wherein the packet-related parameter information comprises PHY Mode, GI, LTF Symbol Numbers and LTF Type of a PPDU to be transmitted by the shared AP.

Details of step S701 to step S703 are illustrated previously. Thus, the illustrations are omitted here. In the M-AP coordination system 100, the first AP10 can share its TX OP with the shared AP, enabling coordinated transmission and improving network efficiency. Additionally, since the coordination control frame (E.G., MU-RTS+) is introduced to carry coordination transmission parameters information, it can avoid generating an additional M-AP trigger frame integrated into the frame exchange sequence (FES), leading to low design complexity and high compatibility.

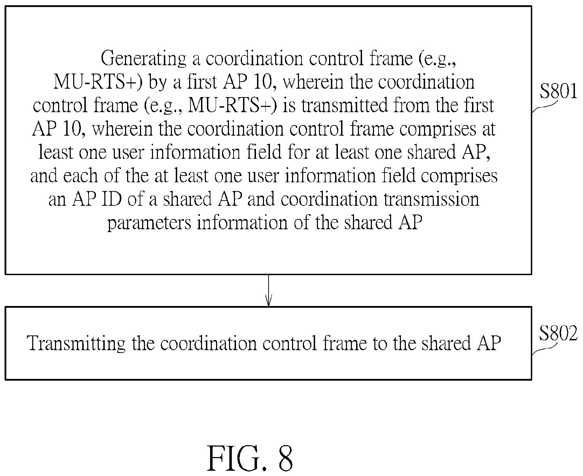

FIG.8 is a flow chart of performing an M-AP coordination method by a sharing AP. The M-AP coordination method includes step S801 to step S802. Step S801 to step S802 are illustrated below.
Step S801: generating a coordination control frame by a first AP, wherein the coordination control frame is transmitted from a first AP, wherein the coordination control frame comprises at least one user information field for at least one shared AP, and each of the at least one user information field comprises an AP ID of a shared AP and coordination transmission parameters information of the shared AP;
Step S802: transmitting the coordination control frame to the shared AP.

In some embodiments, the following method is performed by a shared AP. The method comprises: receiving a coordination control frame, by a processor of a second access point (AP), wherein the coordination control frame is transmitted from a first AP, wherein the coordination control frame comprises at least one user information field corresponding to a second AP, and each of the at least one user information field comprise coordination transmission parameters information corresponding to the second AP; and transmitting, by the processor, a packet during a transmission opportunity (TX OP) shared by the first AP based on the coordination transmission parameters information in the user information field corresponding to the second AP. The at least one user information field corresponding to the second AP may be one user information field. The at least one user information field corresponding to the second AP may be multiple user information fields.
wherein the coordination control frame further comprises at least one special user information field, and each of at least one special user information field comprises a special AID and a common information for the first AP and the second AP, wherein the special AID is configured to indicate present of the common information for the first AP and the second AP, and the packet is transmitted at least based on the coordination transmission parameters information in the user information field corresponding to the second AP and the common information in the special user information field.
wherein the common information comprises packet-related parameter information, wherein the packet-related parameter information comprises at least one of Physical Layer (PHY) Mode, Guard Interval (GI), Long Training Field (LTF) Symbol Numbers, LTF Type, PPDU duration information, TX OP timing information, the number of shared APs.

In some embodiments, the coordination control frame further comprises a transmission Power information for the second AP. In some embodiments, the coordination transmission parameters information at least comprises Target STA ID of the second AP.

In some embodiments, the AP ID of the second AP is an AID in an AID field in the user information field, a BSS ID of a BSS of the second AP, or MAC address of the second AP.

In some embodiments, the coordination control frame further comprises a Media Access Control (MAC) header and a special user information field, the method further comprises: acquiring an AP ID of the first AP, wherein the AP ID of the first AP is a transmitter address (TA) in the MAC header, an AID in an AID field in the special user information field, or an ID in a non-AID field in the special user information field; and identifying the first AP as a sharing AP based on the AP ID of the first AP.

The method further comprises: transmitting a response to the first AP in response to the coordination control frame received by the second AP; and receiving an M-AP trigger frame from the first AP, wherein the M-AP trigger frame is used for triggering the starting time and the ending time of the packet transmitted by the second AP to be synchronized with the starting time and the ending time of a first packet transmitted by the first AP.

In some embodiments, the coordination control frame is used for triggering the starting time and the ending time of the packet transmitted by the second AP to be synchronized with the starting time and the ending time of a first packet transmitted by the first AP. wherein the coordination control frame further comprises a transmission Power information for the second AP. In some embodiments, the coordination control frame further comprises a transmission Power information for the second AP.

In summary, the embodiments disclose an M-AP coordination method, a related wireless communication device (e.g., an AP) and an M-AP coordination system. The M-AP coordination system provides several advantages over conventional systems. By utilizing the coordination control frame (e.g., MU-RTS+) with enhanced information fields, the system enables efficient communication and cooperation between access points, facilitating techniques such as coordinated spatial reuse (CSR), coordinated beam-forming (CBF), and coordinated TDMA. By leveraging existing M-AP trigger frame mechanisms and augmenting them with enriched information fields (e.g., special AID, coordination transmission parameters information, sharing AP's AP AID, and shared AP's AP AID), the system eliminates the need for additional M-AP trigger frames, simplifying the design and ensuring compatibility with existing network features.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A multi-access point, M-AP, coordination method comprising:
receiving (S701) a coordination control frame, by a processor (11b) of a second access point, AP (11), wherein the coordination control frame is transmitted from a first AP (10), wherein the coordination control frame comprises at least one user information field corresponding to a second AP (11), and each of the at least one user information field comprise coordination transmission parameters information corresponding to the second AP (11); and
transmitting (S703), by the processor (11b), a packet during a transmission opportunity, TX OP, shared by the first AP (10) based on the coordination transmission parameters information in the user information field corresponding to the second AP (11).

2. The method of claim 1, wherein the coordination control frame further comprises at least one special user information field, and each of at least one special user information field comprises a special AID and a common information for the first AP (10) and the second AP (11), wherein the special AID is configured to indicate present of the common information for the first AP (10) and the second AP (11), and the packet is transmitted at least based on the coordination transmission parameters information in the user information field corresponding to the second AP (11) and the common information in the special user information field.

3. The method of claim 1, wherein the coordination control frame further comprises a Media Access Control, MAC, header and a special user information field, the method further comprises:
acquiring an AP ID of the first AP (10), wherein the AP ID of the first AP (10) is a transmitter address, TA, in the MAC header, an AID in an AID field in the special user information field, or an ID in a non-AID field in the special user information field; and identifying the first AP (10) as a sharing AP based on the AP ID of the first AP (10).

4. The method of claim 1, wherein the at least one user information field comprises multiple user information fields, and each of multiple user information fields comprises an AP ID of the second AP (11) and coordination transmission parameters information of the second AP (11).

5. The method of claim 1, further comprising:
transmitting, by the processor (11b), a response to the first AP (10) in response to the coordination control frame received by the second AP (11); and
receiving, by the processor (11b), an M-AP trigger frame from the first AP (10), wherein the M-AP trigger frame is used for triggering the starting time and the ending time of the packet transmitted by the second AP (11) to be synchronized with the starting time and the ending time of a first packet transmitted by the first AP (10).

6. The method of claim 1, wherein the coordination control frame is used for triggering the starting time and the ending time of the packet transmitted by the second AP (11) to be synchronized with the starting time and the ending time of a first packet transmitted by the first AP (10).

7. The method of claim 1, wherein the coordination transmission parameters information comprises at least one of transmission Power information for the second AP (11), beamforming target information for the second AP (11), Target STA ID of second AP (11), an interference signal level induced by sharing AP, target AP's STA response block acknowledgment information, the tolerable interference signal level of sharing AP, a resource unit allocation for the second AP (11), an AP ID of the sharing AP, coordination mode information for indicating a coordination transmission mode during the TX OP, information for indicating whether there is a response for the coordination control frame, information for indicating the number of shared AP, a Beamforming target information for the sharing AP, PPDU duration information, PHY mode, and transmission Power information for the sharing AP.

8. The method of claim 1, wherein the coordination control frame further comprises a transmission Power information for the second AP (11).

9. The method of claim 2, wherein the common information comprises packet-related parameter information, wherein the packet-related parameter information comprises at least one of: Physical Layer, PHY, Mode; Guard Interval, GI; Long Training Field, LTF, Symbol Numbers; LTF Type; PPDU duration information; TX OP timing information; and the number of shared APs.

10. A multi-access point, M-AP, coordination method comprising:
generating (S801) a coordination control frame, by a processor (10b) of a first access point, AP (10), wherein the coordination control frame comprises at least one user information field corresponding to a second AP (11), and each of the at least one user information field comprise coordination transmission parameters information corresponding to the second AP (11); and
transmitting (S802), by the processor (10b), the coordination control frame to the shared AP.

11. The method of claim 10, wherein the coordination control frame further comprises at least one special user information field, and each of at least one special user information field comprises a special AID and a common information for the first AP (10) and the second AP (11), wherein the special AID is configured to indicate present of the common information for the first AP (10) and the second AP (11), and the packet is transmitted at least based on the coordination transmission parameters information in the user information field corresponding to the second AP (11) and the common information in the special user information field.

12. The method of claim 10, wherein the coordination control frame comprises an AP ID of the first AP (10), and the AP ID of the first AP (10) is a transmitter address, TA, in a Media Access Control, MAC, header in the coordination control frame, an AID in an AID field in the special user information field, or an ID in a non-AID field in the special user information field.

13. The method of claim 10, wherein the at least one user information field comprises multiple user information fields, and each of multiple user information fields comprises the AP ID of the same AP and coordination transmission parameters information of the same AP.

14. The method of claim 10, further comprising:
receiving, by the processor (10b), a response from a second AP (11) in response to the coordination control frame; and
transmitting, by the processor (10b), an M-AP trigger frame to the second AP (11), wherein the M-AP trigger frame is used for triggering the starting time and the ending time of a packet transmitted by the second AP (11) to be synchronized with the starting time and the ending time of a packet transmitted by the first AP (10), wherein the second AP (11) is the shared AP.

15. The method of claim 10, wherein the coordination control frame is used for triggering the starting time and the ending time of a packet transmitted by a second AP (11) to be synchronized with the starting time and the ending time of a packet transmitted by the first AP (10), wherein the second AP (11) is the shared AP.
